(19) Europäisches Patentamt
European Patent Office
Office européen des brevets

(11) Veröffentlichungsnummer: **0 508 183 B1**

(12) **EUROPÄISCHE PATENTSCHRIFT**

(45) Veröffentlichungstag der Patentschrift: **07.06.95**

(51) Int. Cl.6: **F16B 13/14**, E21D 20/02, C08F 299/06, C08F 299/00, C08L 75/14, C09J 175/14

(21) Anmeldenummer: **92104861.7**

(22) Anmeldetag: **20.03.92**

# (54) Patrone für die chemische Befestigungstechnik.

(30) Priorität: **11.04.91 DE 4111828**

(43) Veröffentlichungstag der Anmeldung: **14.10.92 Patentblatt 92/42**

(45) Bekanntmachung des Hinweises auf die Patenterteilung: **07.06.95 Patentblatt 95/23**

(84) Benannte Vertragsstaaten: **BE CH DE FR GB IT LI**

(56) Entgegenhaltungen:
**EP-A- 0 341 500**
**EP-A- 0 432 087**
**US-A- 4 447 563**

(73) Patentinhaber: **BASF Aktiengesellschaft**
**Carl-Bosch-Strasse 38**
**D-67063 Ludwigshafen (DE)**

(72) Erfinder: **Cramer, Edwin, Dr.**
**Hohenzollernstrasse 87 a**
**W-6700 Ludwigshafen (DE)**
Erfinder: **Peter, Roland, Dr.**
**Pfalzring 92**
**W-6704 Mutterstadt (DE)**
Erfinder: **Scholz, Dankmar**
**Heidelberger Ring 31**
**W-6710 Frankenthal (DE)**
Erfinder: **Zwecker, Joachim, Dr.**
**Moltkestrasse 18**
**W-6940 Weinheim (DE)**
Erfinder: **Folda, Thomas, Dr.**
**Pestalozzistrasse 40**
**W-6730 Neustadt (DE)**
Erfinder: **Hense, Ulrich, Dr.**
**Römerauterrasse 18**
**W-8910 Landsberg / Lech (DE)**
Erfinder: **Mauthe, Peter**
**Herbert-Kessel-Strasse 8**
**W-8939 Türkheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 508 183 B1

## Beschreibung

Die Verwendung von Reaktivharzmassen auf der Basis von ungesättigten Polyesterharzen, Vinylesterharzen oder von Epoxidharzen als Klebe- und Haftmittel für die chemische Befestigungstechnik ist seit langem bekannt. Es handelt sich dabei um Zweikomponentensysteme, wobei eine Komponente das Reaktivharz und die andere Komponente den Härter enthält. Andere, übliche Bestandteile wie Füllmittel, Beschleuniger, Stabilisatoren, Lösungsmittel einschließlich Reaktivlösungsmittel (reaktive Verdünner) können in der einen und/oder der anderen Komponente enthalten sein. Durch Vermischen der beiden Komponenten wird dann die Reaktion unter Bildung eines gehärteten Produktes in Gang gebracht.

Zur Befestigung von Ankerstangen oder Innengewindehülsen in Bohrlöchern werden im allgemeinen Patronen verwendet mit 2 Kammern zur Trennung der in der Patrone enthaltenen Komponenten. Die Patrone wird in das Bohrloch eingesetzt, und durch schlagdrehendes Einbringen des Befestigungselementes in die Bohrlöcher werden die Patrone und die Kammern zerstört. Dabei werden die beiden Komponenten gemischt und die Reaktion wird initiiert. Die ausgehärtete Reaktionsharzmasse ist in der Lage, spreizdruckfrei die Lasteinleitung in den Untergrund zu ermöglichen. Vor allen Dingen für Schwerlastverankerungen haben sich derartige Verbundanker in der Vergangenheit bewährt.

In der EP-B 150 555 ist eine Patrone zur Verwendung beim Befestigen eines Ankerbolzens beschrieben, die zwei voneinander getrennte Kammern enthält. Die eine Kammer enthält ein Epoxyacrylat als Reaktionsharz, die andere ein Härtungsmittel dafür. Auch die EP-A 199 671 beschreibt Verankerungen auf Basis von Epoxidacrylaten. Diese weisen eine hohe Härtungsgeschwindigkeit auf, die Härtungsprodukte haben eine gute Chemikalien- und Wasserbeständigkeit; die Ausreißfestigkeit der Verankerung läßt aber in vielen Fällen zu wünschen übrig.

Der Erfindung lag daher die Aufgabe zugrunde, ein Kunstharz für die chemische Befestigungstechnik bereitzustellen, welches im ausgehärteten Zustand abgewogen gute mechanische Eigenschaften, insbesondere eine hohe Zähigkeit und gute Haftung an silikatischen Materialien aufweist, so daß auf dieser Basis Verankerungen mit hoher Ausreißfestigkeit erzeugt werden können.

Es wurde nun gefunden, daß diese Aufgabe gelöst wird, wenn man als härtbares Kunstharz ein Vinylesterurethanharz auf Basis von Hydroxypropylmethacrylat verwendet. Gegenstand der Erfindung ist demzufolge eine Patrone zur chemischen Befestigung von Ankerstangen in Bohrlöchern, enthaltend

I. ein Vinylesterurethanharz als radikalisch härtbares Kunstharz und - räumlich getrennt davon angeordnet -

II. ein Härtungsmittel für das Kunstharz.

wobei das Vinylesterurethanharz folgende Gruppen aufweist:

a)

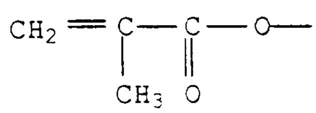

b)

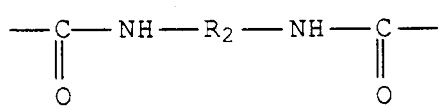

(mit $R_2$ = aliphatischer, aromatischer oder cycloaliphatischer Rest mit 3 bis 300 C-Atomen), sowie gegebenenfalls

c) $-O-R_3-O$

(mit $R_3$ = aliphatischer, aromatischer oder cycloaliphatischer Rest mit 2 bis 500 C-Atomen) und/oder

d) $-NH-R_4-NH$

(mit $R_4$ = aliphatischer, aromatischer oder cycloaliphatischer Rest mit 2 bis 500 C-Atomen),

und ein Umsetzungsprodukt ist aus

A. einem polyfunktionellen Isocyanat,

B1. gegebenenfalls einem mehrwertigen Alkohol und/oder

B2. gegebenenfalls einem mehrwertigen Amin,

C. Hydroxypropylmethacrylat.

In der Regel wird die Konfektionsform einer 2-Kammerpatrone gewählt. Als bewährte Ausführungsform haben sich Glaspatronen gezeigt, da das "Verpackungsmittel" Glas beim Mischprozeß fein zermahlen und dann als verstärkender Füllstoff in die Bindemittelmatrix integriert wird. Weiterhin können Mehrkammerpatronen aus keramischem Material eingesetzt werden, wie sie beispielsweise in DE-A 39 29 603.2 beschrieben sind. Ferner sind für großvolumige Patronen auch verschiedene Kunststoffoliensysteme - sogenannte Schlauchpatronen - einsetzbar. Grundsätzlich ist es auch möglich, eine Komponente, vorzugsweise das Härtungsmittel durch Makroverkapselung von der anderen Komponente zu trennen.

Ein weiterer Gegenstand der Erfindung ist eine Kartusche auf Basis der erfindungsgemäßen Vinylesterurethanharze zur chemischen Befestigung von Dübeln und Ankerstangen in Bohrlöchern. Hierbei werden die beiden Komponenten kurz vor dem Einpressen in das Bohrloch gemischt.

Vinylesterurethanharze sind an sich bekannt, z.B. aus US-A 3 297 745, US-A 3 772 404, US-A 4 618 658, GB-A 2 217 722 und DE-A 37 44 390. Sie weisen folgende Gruppen auf:

a)

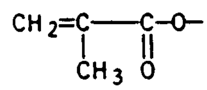

b)

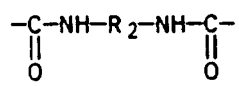

(mit $R_2$ = aromatischer, aliphatischer oder
cycloaliphatischer, gegebenenfalls Ethergruppen enthaltender Rest mit 3 bis 300 C-Atomen, vorzugsweise ein
aromatischer Rest mit 6 bis 100 C-Atomen), sowie gegebenenfalls

c) $-O-R_3-O$

(mit $R_3$ = aliphatischer, cycloaliphatischer oder aromatischer Rest mit 2 bis 500 C-Atomen, vorzugsweise ein aliphatischer Rest mit 4 bis 100 C-Atomen), und/oder

d) $-NH-R_4-NH$

(mit $R_4$ = aliphatischer, cycloaliphatischer oder aromatischer Rest mit 2 bis 500 C-Atomen, vorzugsweise ein aliphatischer Rest mit 4 bis 100 C-Atomen).

Das Vinylesterurethanharz ist ein Umsetzungsprodukt aus

A. einem polyfunktionellen Isocyanat,

B1. gegebenenfalls einem mehrwertigen Alkohol, und/oder

B2. gegebenenfalls einem mehrwertigen Amin,

C. Hydroxylpropylmethacrylat,

wobei bei der Umsetzung das Gewichtsverhältnis A: (B1 + B2) zwischen 100:0 und 100:300 betrug und das Äquivalentverhältnis Hydroxyalkyl(meth)acrylat zu den freien Isocyanatgruppen des Reaktionsprodukts A + $B_1$ + $B_2$ zwischen 3 : 1 und 1 : 2 lag.

Das Vinylesterurethanharz weist zweckmäßigerweise eine Viskosität von 100 bis 10 000, vorzugsweise von 200 bis 1000 mPa•s gemessen mit einem Haake-Rotoviskosimeter bei 23 °C, auf. Da die reinen Harze normalerweise eine verhältnismäßig hohe Viskosität haben, werden sie zweckmäßigerweise mit bis zu 60, insbesondere mit 20 bis 50 Gew.-% äthylenisch ungesättigter Monomerer abgemischt.

Zu den Ausgangsmaterialien ist folgendes zu sagen:

Isocyanate

Zur Herstellung der Vinylesterurethanharze im Sinne der Erfindung kommen alle bekannten aliphatischen, cycloaliphatischen und aromatischen Polyisocyanate mit mindestens 2 Isocyanatgruppen pro Molekül in Frage. Beispielhaft für geeignete Isocyanate seien genannt: 4,4-Diphenylmethandiisocyanat(MDI), Hexamethylendiisocyanat, (HDI), Trimethylhexyldiisocyanat (TMDI), Cyclohexyldiisocyanat, Dicyclopentadiendimethylendiisocyanat, Diisocyanato-diphenylether, Diisocyanatonaphthalin, Diphenylmethan-diisocyanat und Diisocyanato-toluol mit ihren Isomerengemischen, Isophorondiisocyanat (IPDI), Dicyclohexyl-diisocyanat, Polyphenylenpolymethylen-polyisocyanate (Roh-MDI);

Triisocyanato-cyclohexan, Triisocyanato-toluol, Triisocyanato-naphthalin, Triisocyanatobiphenyl, Triisocyanato-trimethylbenzol, Triisocyanatodiphenylmethan, Triisocyanato-methyldiphenylmethan, Triisocyanato-triphenylmethan, Triisocyanato-diphenylether, Tetraisocyanato-diphenylsulfid;
urethangruppenhaltige, präpolymere Polyisocyanate wie z.B. las Reaktionsprodukt aus Trimethylolpropan und Diisocyanatetoluol;
trimerisierte, Isocyanuratgruppen enthaltende Polyisocyanate z.B. auf Basis HDI, Diphenylmethan-disocyanat und Isophorondiisocyanat;
präpolymere Polyisocyanate, die dargestellt werden durch Reaktion von Polyisocyanaten mit einem Unterschuß an Polyepoxiden in Gegenwart geeigneter Katalysatoren;
Polyisocyanate, die durch Vorreaktion eines Teils der NCO-Gruppen Carbodiimid- und Urethonimineinheiten enthalten;
sowie Präpolymere, die neben NCO-Gruppen Urethdioneinheiten enthalten.

Bevorzugte Isocyanate sind 4,4'-Diphenylmethandiisocyanat sowie das Isomerengemisch aus 2,2'- und 4,4'-Diphenylmethandiisocyanat.

Mehrwertige Amine

Als Polyamine können sowohl aliphatische wie auch aromatische Amine eingesetzt werden. Beispielhaft seien genannt: Ethylendiamin, Diethylentriamin, Bis-(4-aminocyclohexyl)-methan, Diaminodiphenylmethan Diaminodiphenylsulfon. Besonders geeignete Amine sind langkettige Amine mit Molekulargewichten von 150 bis 5000. Dazu zählen Etherdiamine wie 4,7-Dioxadecan-1,10-diamin oder Verbindungen der allgemeinen Formel

$H_2N\text{-}(C_3H_6O)_m\text{-}C_3H_6\text{-}NH_2$,

wobei m Zahlen von 2 bis 80 bedeutet, oder Verbindungen der allgemeinen Formel

$H_2N\text{-}C_3H_6\text{-}O\text{-}[(CH_2)_4O]_n\text{-}C_3H_6\text{-}NH_2$,

wobei n Zahlen von 5 bis 80 bedeutet; weiterhin die Aminobenzoesäureester und Anthranilsäureester von Diolen wie z.B. Ethylenglykol, Propylenglykol, Polyethylenglykol, Polypropylenglykol, Polybutadienglykol, Polycaprolactonglykol oder Polytetramethylenetherglykol. Die besonders bevorzugten Aminobenzoesäureester von Polytetramethylenetherglykol haben folgende Struktur:

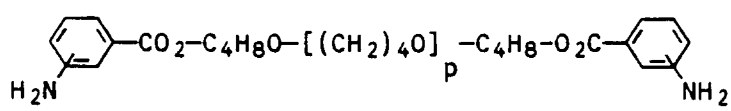

wobei p Zahlen von 5 bis 80 bedeutet.

Mehrwertige Alkohole

Geeignete mehrwertige Alkohole sind: aliphatische Diole, wie Ethandiol-1,2, Propandiol-1,2, Butandiol-1,4, Dipropylenglykol, Neopentylglykol, Trimethylolpropan, Pentaerythrit; alicyclische Diole, wie hydriertes Bisphenol A, Cyclohexandiol, Cyclohexandimethanol und Tricyclohexandimethanol; Phenole wie Bisphenol A oder Resorcin; alkoxylierte Derivate von Bisphenolen wie z.B. Bisphenol A, Bisphenol S oder Bisphenol F; aliphatische oder aromatische Polyetherole mit Molekulargewichten bis 5000, z.B. Polyethylenglykol oder Polypropylenglykol; sowie Polyesterole, wobei sowohl gesättigte als auch ungesättigte hydroxyterminierte Polyester in Frage kommen. Grundsätzlich können auch Aminole, wie Ethanolamin, Propanolamin, Diethanolamin, Triethanolamin und Aminophenole mit den Isocyanaten umgesetzt werden. Bevorzugt ist Dipropylenglykol, gegebenenfalls im Gemisch mit Polypropylenglykol.

Hydroxypropylmethacrylat

Zum Aufbau der endständigen Doppelbindungen im Vinylesterurethan wird Hydroxypropylmethacrylat mit den aus A sowie gegebenenfalls $B_1$ und $B_2$ hergestellten, Isocyanatgruppen enthaltenden Verbindungen umgesetzt.

Monomere

Geeignet sind Vinylverbindungen, wie Styrol, α-Methylstyrol, alkylierte Styrole, Divinylbenzol, Vinylacetat und Vinylpyridin; niedermolekulare Maleinimide; Allylverbindungen, wie Diallylphthalat und Triallylcyanurat, Acryl- und Methacrylverbindungen, wie Acrylnitril, (Meth)acrylamid, Methyl(meth)acrylat, Ethyl(meth)-acrylat, Propyl(meth)acrylat, Butyl(meth)acrylat, Ethylhexyl(meth)acrylat, Neopentylglykol(meth)acrylat, Ethylenglykoldi(meth)acrylat, Propylenglykoldi(methacrylat), Butandioldi(meth)acrylat, Glycerin-(meth)-acrylate, Hydroxyalkyl(meth)acrylate, alkoxilierte Bisphenol A-di(meth)acrylate sowie Glycidylmethacrylat und niedermolekulare Maleinimide. Bevorzugt ist Butandioldimethacrylat.

Zur Herstellung der Vinylesterurethanharze sind verschiedene Verfahren möglich. Einmal kann zunächst das Isocyanat A mit dem Hydroxyalkylmethacrylat C im Molverhältnis von etwa 1:0,5 bis 1:3 vorreagiert und gegebenenfalls anschließend mit dem mehrwertigen Alkohol B1 und/oder dem mehrwertigen Amin B2 umgesetzt werden. In einem zweiten Verfahren werden die Komponenten A, B1 und ggf. B2 im Verhältnis A: (B1 + B2) von 100:0 bis 100:300 vermischt und bei 40 bis 110 °C umgesetzt. Anschließend wird die zur Absättigung der freien Isocyanatgruppen notwendige Menge den Hydroxyalkylmethacrylat C zugefügt. Eine weitere Möglichkeit besteht darin, die Komponenten A, B1, B2 und C gemeinsam in einer Eintopfreaktion zum Vinylesterurethanharz umzusetzen. Eventuell vorhandenes, überschüssiges Polyisocyanat reagiert dabei mit dem Hydroxyalkylmethacrylat zu einem verhältnismäßig niedermolekularen Vinylesterurethan, was zur Einstellung der Viskosität des Harzes ausgenutzt werden kann. Man erhält ein Gemisch präpolymerer Vinylesterurethane mit unterschiedlicher Kettenlänge und Molekulargewicht. Ein Restgehalt an freien NCO-Gruppen im Vinylesterurethanharz ist in vielen Fällen vorteilhaft; überschüssige NCO-Gruppen können durch chemische Reaktion an OH-aktiven Materialien wie Glas und Füllstoffen anbinden. Weiterhin kann NCO-haltiges Vinylesterurethanharz mit OH/NH-reaktiven Materialien wie z.B. OH-terminierten ungesättigten Polyestern vernetzen.

Die genannten Umsetzungen können in Substanz oder in den genannten Monomeren als Lösungsmittel durchgeführt werden. Zur Beschleunigung der Umsetzungen der Isocyanate mit den Alkohol- und Aminoverbindungen können geeignete Katalysatoren, wie sie aus der Polyurethanchemie bekannt sind, eingesetzt werden. Dazu zählen beispielsweise tertiäre Amine wie 1,2-Dimethylimidazol, Diazabicyclooctan, Diazabicyclononan, Triethylendiamin, Metallsalze wie Bleioctoat, Zinnoctoat oder Dibutylzinndilaurat sowie Mischungen von tertiären Aminen und Metallsalzen. Die Katalysatoren werden üblicherweise in Mengen von 0,05 bis 2 Gew.-%, bezogen auf A + B + C, zugegeben. Eine vorzeitige Gelierung der Reaktionsmischung kann durch Zusatz üblicher Inhibitoren wie z.B. Phenothiazin, Hydrochinon, Dimethylhydrochinon, Triphenylphosphit, tert.-Butyl-hydrochinon, Hydrochinonmononethylether, tert.-Butylbrenzkatechin und p-Benzochinon verhindert werden. Die Inhibitoren werden in Mengen von 0,01 bis 2 Gew.-%, bezogen auf A + B + C, zugesetzt.

Dem fertigen Vinylesterurethanharz können in Mengen von bis zu 50 %, vorzugsweise von 2 bis 20 %, bezogen auf sein Gewicht, andere härtbare Harze, wie Polyester-, Vinylester-, Bismaleinimid- oder Epoxid-Harze zugemischt werden. Zum Zweck der Zähmodifizierung kann das Vinylesterurethanharz 2 bis 20 Gew.-% eines Thermoplasten, wie Polyamid, Polyester oder eines Kautschuks enthalten.

Als verstärkende Füllstoffe für die Bindemittelmatrix dienen z.B. Quarz, Glas, Korund, Porzellan, Steingut, Schwerspat, Leichtspat, Talkum und Kreide.

Die Füllstoffe werden in Form von Sanden, Mehlen oder speziellen Formkörpern (Zylinder, Kugeln usw.) entweder der Harzlosung und/oder dem Härter (Initiator) zugemischt.

Die Füllstoffe können als Fasern (fibrilläre Füllstoffe) eingesetzt werden. Bevorzugt und deutlicher verstärkend wirken sich die globulären, inerten Stoffe (Kugelform) aus.

Falls für die Peroxidhärtung Beschleuniger erforderlich sind, werden diese zweckmäßigerweise räumlich zusammen mit dem Harz, d.h. getrennt vom Härter, angeordnet. Geeignete Beschleuniger sind:

Aromatische Amine wie N,N-Dimethylanilin, N,N-Diethylanilin; Toluidine und Xylidine wie N,N-Diisopropyliden-para-toluidin, N,N-Dimethyl-p-toluidin, N,N-Bis-(2-hydroxy-ethyl)-xylidin; ferner Co-, Mn-, Sn- oder Ce-Salze, wie z.B. Cobaltnaphthenat.

Räumlich getrennt von Vinylesterurethanharz ist in der erfindungsgemäßen Patrone das Härtungsmittel für das Harz angeordnet. Bevorzugte Härtungsmittel sind bei niedrigen Temperaturen zerfallende organische Peroxide. Besonders gut geeignet sind Benzoylperoxid und Methylethylketonperoxid, ferner tert.-Butylperbenzoat, Cyclohexanonperoxid, Laurylperoxid und Cumolhydroperoxid.

Die Peroxide werden vorzugsweise in Mengen von 0,5 bis 10 Gew.-%, vorzugsweise von 1 bis 5 Gew.-%, bezogen auf das Vinylesterurethanharz, eingesetzt.

Die Härtungsmittel werden zweckmäßigerweise auf inerte Füllstoffe aufgebracht, wobei Quarzsande mit Korngrößen von 0,5 - 3 mm für Patronendimensionen < M16 und von 3 - 6 mm bei Dimensionen > M20

bevorzugt sind.

Bei Verwendung der erfindungsgemäßen Vinylesterurethanharze, welche gegenüber bisher bekannten eingesetzten Harzsystemen vorteilhaftes Rißdehnungsverhalten und geringe Schrumpfspannung aufweisen, ist insbesondere die ausgezeichnete Adhäsionseigenschaft gegenüber mineralischen Aufnahmewerkstoffen (Beton, Naturstein) hervorzuheben. Sie dienen daher als ausgezeichnete Harzbindemittel für spreizdruckfreie Befestigungen im Schwerlastbereich. Aufgrund der obengenannten Eigenschaftel im abgebundenen Zustand eignen sich derartige Befestigungsmittel für den Einsatz bei thermischer Wechselwirkung (z.B. Frost/Tauwechsel) oder bei hoher dynamischer Belastung (z.B. zur Maschinenbefestigung).

Beispiele

Herstellung eines Vinylesterurethanharzes

1485 g eines prepolymeren Diisocyanats auf Basis von 1286 g 4,4'-Diphenylmethandiisocyanat, 125 g Dipropylenglykol und 74 g Polypropylenglykol (OH-Zahl = 250) werden in 1320 g Styrol bei 40 °C gelöst und mit 1,3 ml Dibutylzinndilaurat versetzt. Danach läßt man das Polyisocyanat bei 50 °C mit 1195 g Hydroxypropylmethacrylat reagieren. Man gibt weitere 1,3 ml Dibutylzinndilaurat zu und rührt 2 h bei 70 °C. Das Harz wird mit 0,8 g Hydrochinon inhibiert.

Viskosität bei 23 °C: 460 mPa•s

Herstellung und Anwendung der Patrone (Dimension M12)

Das Harz wurde in die äußere Kammer einer Patrone eingefüllt, in die innere Kammer wurde als Härter Dibenzoylperoxid gegeben.

a) Außenpatrone

| | | |
|---|---|---|
| Glasgewicht | | 5,6 g |
| Glasaußendurchmesser | 10,75 mm | |
| Glaswandstärke | 0,55 mm | |
| Patronenlänge | 100,00 mm | |
| Vinylesterurethanacrylat | | 4,3 g |
| 65%ig in Monostyrol Quarz 1,5 ...2,0 mm | | 6,6 g |

b) Innenpatrone

| | | |
|---|---|---|
| Glasgewicht | | 1,2 g |
| Glasaußendurchmesser | 6,50 mm | |
| Glaswandstärke | 0,65 mm | |
| Patronenlänge | 80,00 mm | |
| Dibenzoylperoxid (20%ig in Gips) | | 0,8 g |

Die Patrone wurde verschlossen und in ein Bohrloch (Durchmesser 14 mm, Länge 110 mm) eingesetzt. Eine Ankerstange (M 12) wurde in das Bohrloch eingetrieben, wobei die Glaswände der Patrone zerstört werden. Nach 3 - 4 min war das Harz geliert. Die Gesamthärtungszeit betrag 30 min. Es wurde eine Verankerung mit hoher Ausreißfestigkeit erhalten.

**Patentansprüche**

**1.** Patrone zur chemischen Befestigung von Dübeln und Ankerstangen in Bohrlöchern, enthaltend

I. ein radikalisch härtbares Kunstharz und - räumlich davon angeordnet -

II. ein Härtungsmittel für das Kunstharz,

wobei das Kunstharz ein Vinylesterurethanharz ist, das folgende Gruppen aufweist:

a)

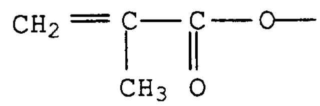

b)

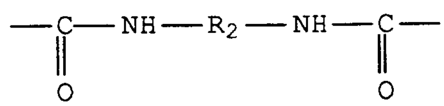

(mit $R_2$ = aliphatischer, aromatischer oder cycloaliphatischer Rest mit 3 bis 300 C-Atomen), sowie gegebenenfalls

c) $-O-R_3-O$

(mit $R_3$ = aliphatischer, aromatischer oder cycloaliphatischer Rest mit 2 bis 500 C-Atomen) und/oder

d) $-NH-R_4-NH$

(mit $R_4$ = aliphatischer, aromatischer oder cycloaliphatischer Rest mit 2 bis 500 C-Atomen),

dadurch gekennzeichnet, daß das Vinylesterurethanharz ein Umsetzungsprodukt ist aus

A. einem polyfunktionellen Isocyanat,

B1. gegebenenfalls einem mehrwertigen Alkohol und/oder

B2. gegebenenfalls einem mehrwertigen Amin,

C. Hydroxypropylmethacrylat.

**2.** Patrone nach Anspruch 1, dadurch gekennzeichnet, daß bei der Umsetzung das Gewichtsverhältnis A : ($B_1$ + $B_2$) zwischen 100 : 0 und 100 : 300 betrug und das Äquivalentverhältnis Hydroxyalkylmethacrylat zu den freien Isocyanatgruppen des Reaktionsprodukts A + $B_1$ + $B_2$ zwischen 3 : 1 und 1 : 2 lag.

**3.** Patrone nach Anspruch 1, dadurch gekennzeichnet, daß das Vinylesterurethanharz 0 bis 60, vorzugsweise 20 bis 50 Gew.-% eines ethylenisch ungesättigten Comonomeren enthält.

**4.** Patrone nach Anspruch 1, dadurch gekennzeichnet, daß das Vinylesterurethanharz einen Beschleuniger für da Härtungsmittel enthält, vorzugsweise Cobaltnaphthenat oder ein organisches Amin.

**5.** Patrone nach Anspruch 1, dadurch gekennzeichnet, daß das Vinylesterurethanharz bis zu 50 %, bezogen auf sein Gewicht, eines ungesättigten Polyester-, Vinylester-, Bismaleinimid- oder Epoxidharzes zugemischt enthält.

**6.** Patrone nach Anspruch 1, dadurch gekennzeichnet, daß das Vinylesterurethanharz eine Viskosität bei 23 °C zwischen 100 und 10 000 [mPa•s] aufweist.

**7.** Patrone nach Anspruch 1, dadurch gekennzeichnet, daß das Härtungsmittel ein organisches Peroxid ist, welches in Mengen von 0,5 bis 10 Gew.-%, bezogen auf das Vinylesterurethanharz, eingesetzt wird.

**8.** Patrone nach Anspruch 1, dadurch gekennzeichnet, daß sie zwei oder mehrere voneinander getrennte Kammern umfaßt, in welchen das Kunstharz bzw. das Härtungsmittel angeordnet sind.

**9.** Patrone nach Anspruch 8, dadurch gekennzeichnet, daß das Wandmaterial der Kammern aus Glas, Keramik oder Kunststoff besteht.

**10.** Kartusche zur chemischen Befestigung von Dübeln und Ankerstangen in Bohrlöchern, enthaltend

I. ein radikalisch härtbares Kunstharz und - räumlich davon angeordnet -

II. ein Härtungsmittel für das Kunstharz,
nach den Ansprüchen 1 bis 8.

**Claims**

**1.** A capsule for the chemical fixing of wall plugs and anchor bolts in drilled holes, comprising
I. a free-radically curable synthetic resin and - spatially separate therefrom -
II. a curing agent for the synthetic resin
wherein the synthetic resin is a vinyl ester urethane resin which has the following groups:
a)

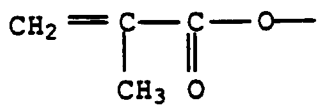

b)

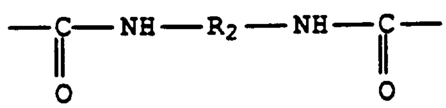

(where $R_2$ is an aliphatic, aromatic or cycloaliphatic radical of from 3 to 300 carbon atoms), and optionally
c) $-O-R_3-O$
(where $R_3$ is an aliphatic, aromatic or cycloaliphatic radical of from 2 to 500 carbon atoms) and/or
d) $-NH-R_4-NH$
(where $R_4$ is an aliphatic, aromatic or cycloaliphatic radical of from 2 to 500 carbon atoms),
characterized in that the vinyl ester urethane resin is a reaction product of
A. a polyisocyanate,
B1. optionally a polyalcohol and/or
B2. optionally a polyamine,
C. hydroxypropyl methacrylate

**2.** A capsule as claimed in claim 1, characterized in that the reaction was carried out with a weight ratio of A : (B1 + B2) of from 100:0 to 100:300, the equivalent ratio of hydroxyalkyl methacrylate to the free isocyanate groups of the reaction product A + B1 + B2 being within the range from 3:1 to 1:2.

**3.** A capsule as claimed in claim 1, characterized in that the vinyl ester urethane resin contains from 0 to 60, preferably from 20 to 50, % by weight of an ethylenically unsaturated comonomer.

**4.** A capsule as claimed in claim 1, characterized in that the vinyl ester urethane resin contains an accelerant for the curing agent, preferably cobalt naphthenate or an organic amine.

**5.** A capsule as claimed in claim 1, characterized in that the vinyl ester urethane resin contains up to 50%, based on its weight, of an unsaturated polyester, vinyl ester, bismaleimide or epoxy resin in admixture.

**6.** A capsule as claimed in claim 1, characterized in that the vinyl ester urethane resin has a viscosity at 23 °C within the range from 100 to 10,000 [mPa•s].

**7.** A capsule as claimed in claim 1, characterized in that the curing agent is an organic peroxide which is used in an amount of from 0.5 to 10% by weight, based on the vinyl ester urethane resin.

**8.** A capsule as claimed in claim 1, characterized in that it comprises two or more mutually separate chambers for the synthetic resin on the one hand and the curing agent on the other.

**9.** A capsule as claimed in claim 8, characterized in that the wall material of the chambers comprises glass, ceramics or plastics.

**10.** A cartridge for the chemical fixing of wall plugs and anchor bolts in drilled holes, comprising
I. a free-radically curable synthetic resin and - spatially separate therefrom -
II. a curing agent for the synthetic resin, according to claims 1 to 8.

**Revendications**

**1.** Cartouche pour la fixation chimique de goujons et de barres d'ancrage dans des trous de soude, contenant
I. une résine synthétique durcissable sous l'action de radicaux libres et - séparé spatialement de celle-ci
II. un durcisseur pour la résine synthétique,
cette dernière consistant en une résine d'ester vinylique-uréthanne qui contient les groupes suivants :
a)

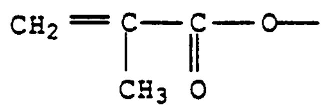

b)

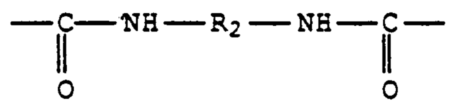

(dans lesquels $R_2$ représente un radical aliphatique, aromatique ou cycloaliphatique contenant de 3 à 300 atomes de carbone), et le cas échéant
c) $—O—R_3—O$
(dans lequel $R_3$ représente un radical aliphatique, aromatique ou cycloaliphatique contenant 2 à 500 atomes de carbone) et/ou
d) $—NH—R_4—NH$
(dans lequel $R_4$ représente un radical aliphatique, aromatique ou cycloaliphatique contenant 2 à 500 atomes de carbone),
caractérisée en ce que la résine d'ester vinylique-uréthanne est un produit de réaction de
A. un isocyanate polyfonctionnel,
B1. le cas échéant un alcool polyvalent et/ou
B2. le cas échéant une amine polyvalente,
C. le méthacrylate d'hydroxypropyle.

**2.** Cartouche selon la revendication 1, caractérisée en ce que, lors de la réaction, les proportions relatives en poids A/(B1 + B2) allaient de 100 : 0 à 100 : 300 et le rapport entre les équivalents de méthacrylate d'hydroxyalkyle et les groupes isocyanate libres du produit de réaction A + B1 + B2 allaient de 3 : 1 à 1 : 2.

**3.** Cartouche selon la revendication 1, caractérisée en ce que la résine d'ester vinylique-uréthanne contient de 0 à 60, de préférence de 20 à 50, % en poids d'un comonomère à insaturation éthylénique.

**4.** Cartouche selon la revendication 1, caractérisée en ce que la résine d'ester vinylique-uréthanne contient un accélérateur pour le durcisseur, de préférence du naphténate de cobalt ou une amine organique.

**5.** Cartouche selon la revendication 1, caractérisée en ce que la résine d'ester vinylique-uréthanne contient en mélange jusqu'à 50 % de son poids d'une résine de polyester insaturé, d'ester vinylique, de bis-maléimide ou époxydique.

**6.** Cartouche selon la revendication 1, caractérisée en ce que la résine d'ester vinylique-uréthanne a une viscosité de 100 à 10 000 mPa.s à 23 °C.

**7.** Cartouche selon la revendication 1, caractérisée en ce que le durcisseur est un peroxyde organique mis en oeuvre en quantité de 0,5 à 10 % du poids de la résine d'ester vinylique-uréthanne.

**8.** Cartouche selon la revendication 1, caractérisée en ce qu'elle comprend deux ou plusieurs chambres séparées les unes des autres et dans lesquelles on dispose respectivement la résine synthétique et le durcisseur.

**9.** Cartouche selon la revendication 8, dans laquelle le matériau de paroi des chambres est du verre, de la céramique ou du plastique.

**10.** Cartouche pour la fixation chimique de goujons et de barres d'ancrage dans des trous de mines, contenant

I. une résine synthétique durcissable sous l'action de radicaux libres et - séparé de celle-ci dans l'espace -

II. un durcisseur pour la résine synthétique,

selon les revendications 1 à 8.